# EUROPEAN PATENT APPLICATION

(11) **EP 2 879 335 A1**
(43) Date of publication of application: **03.06.2015**
(21) Application number: 13822594.1
(22) Date of filing: 26.07.2013
(51) Int. Cl.: H04L 12/717, H04L 12/70, H04L 12/761

(54) **CONTROL DEVICE, COMMUNICATION SYSTEM, COMMUNICATION METHOD AND PROGRAM**

(30) Priority: 26.07.2012 JP 2012165451
(71) Applicant: NEC Corporation, Tokyo 108-8001 (JP)
(72) Inventor: NAKANO, Takahiro, Tokyo 108-8001 (JP); YANAGISAWA, Masakatsu, Tokyo 108-0073 (JP); TAKAHASHI, Junji, Tokyo 108-0073 (JP); TSUBOUCHI, Masayoshi, Tokyo 108-0073 (JP)
(74) Representative: Vossius & Partner Patentanwälte Rechtsanwälte mbB
(86) International application number: PCT/JP2013/070320
(87) International publication number: WO 2014/017631

(57) **Abstract**

A control apparatus, comprises: a topology acquisition unit that acquires a topology of a network including a relay apparatus(es) to be controlled; a broadcast path search unit that calculates a broadcast path with an arbitrary external node used as a start point based on the acquired network topology and information on an external node(s) connected to the network; a control command generation unit that generates control information for causing a relay apparatus(es) on the calculated broadcast path to perform packet forwarding along the broadcast path; and a communication unit that sets the generated control information in the relay apparatus(es) on the broadcast path. Even when broadcasting is performed in a centralized-control-type network, network load between relay apparatuses and a control apparatus and processing load of the control apparatus are reduced.

## Description

### TECHNICAL FIELD

### (REFERENCE TO RELATED APPLICATION)

The present invention is based upon and claims the benefit of the priority of Japanese patent application No. 2012-165451, filed on July 26, 2012, the disclosure of which is incorporated herein in its entirety by reference thereto.

The present invention relates to a control apparatus, a communication system, a communication method, and a program. In particular, it relates to a control apparatus controlling control target switches in a centralized manner, a communication system, a communication method, and a program.

### BACKGROUND

In recent years, a technique referred to as OpenFlow has been proposed (see Non-Patent Literatures 1 and 2). OpenFlow recognizes communications as end-to-end flows and performs path control, failure recovery, load balancing, and optimization on a per-flow basis. Each OpenFlow switch according to Non-Patent Literature 2 has a secure channel for communication with an OpenFlow controller and operates according to a flow table suitably added or rewritten by the OpenFlow controller. In the flow table, a set of the following three is defined for each flow: matching conditions (Match Fields) against which a packet header is matched; flow statistical information (Counters); and Instructions that define a processing content(s) (see section 4.1 "Flow Table" in Non-Patent Literature 2).

For example, when an OpenFlow switch receives a packet, the OpenFlow switch searches the flow table for an entry having a matching condition (see section 4.3 "Match Fields" in Non-Patent Literature 2) that matches header information of the received packet. If, as a result of the search, the OpenFlow switch finds an entry matching the received packet, the OpenFlow switch updates the flow statistical information (Counters) and processes the received packet on the basis of a processing content(s) (packet transmission from a specified port, flooding, dropping, etc.) written in the Instructions field of the entry. If, as a result of the search, the OpenFlow switch does not find an entry matching the received packet, the OpenFlow switch transmits an entry setting request to the OpenFlow controller via the secure channel. Namely, the OpenFlow switch requests the OpenFlow controller to transmit control information for processing the received packet (Packet-In message). The OpenFlow switch receives a flow entry defining a processing content(s) and updates the flow table. In this way, by using an entry stored in the flow table as control information, the OpenFlow switch performs packet forwarding.

In addition, Patent Literature 1 discloses a method for reducing load on a path control apparatus that corresponds to the OpenFlow controller by setting a different time-out value in a flow entry as described above for each section of a packet communication path.

Hereinafter, "OpenFlow switches" in Non-Patent Literatures 1 and 2 and apparatuses such as "flow switches" in Patent Literature 1 that are controlled in a centralized manner by a control apparatus will collectively be referred to as "relay apparatuses." Likewise, "OpenFlow controller" in Non-Patent Literatures 1 and 2 and an apparatus such as "path control apparatus" in Patent Literature 1 that controls switches in a centralized manner will collectively be referred to as "control apparatus."

### CITATION LIST

### PATENT LITERATURE

### [Patent Literature 1]

Japanese Patent Kokai Publication No. 2011-101245A

### NON-PATENT LITERATURE

### [Non-Patent Literature 1]

Nick McKeown, and seven others, "OpenFlow: Enabling Innovation in Campus Networks," [online], [searched on July 13, 2012], Internet <URL:http://www.openflow.org/documents/openflow-wp-latest.pdf>

### [Non-Patent Literature 2]

"OpenFlow Switch Specification, Version 1.1.0 Implemented (Wire Protocol 0x02)," [online], [searched on July 13, 2012], Internet <URL:http://www.openflow.org/documents/openflow-spec-v1.1.0.pdf>

### SUMMARY

### TECHNICAL PROBLEM

The following analysis has been given by the present inventors. As disclosed in Non-Patent Literatures 1 and 2 and Patent Literature 1, if a relay apparatus receives a packet and the packet does not match any flow entry stored in the relay apparatus, the relay apparatus transmits a flow entry setting request to the control apparatus in order to process this packet. If a large number of packets, packets such as broadcast packets or multicast packets in particular, flow into a relay apparatus, not only this relay apparatus but also other relay apparatuses transmit a large number of flow entry setting requests to the control apparatus. As a result, network load between the relay apparatuses and the control apparatus and processing load of the control apparatus that responds to these flow entry setting requests are increased, counted as a problem.

An object of the present invention is to provide a control apparatus, a communication system, a communication method, and a program capable of reducing, even when broadcasting is performed in the above centralized-control-type network, network load between relay apparatuses and a control apparatus and processing load of the control apparatus.

### SOLUTION TO PROBLEM

According to a first aspect, there is provided a control apparatus, comprising: a topology acquisition unit that acquires a topology of a network including a relay apparatus(es) to be controlled; a broadcast path search unit that calculates a broadcast path with an arbitrary external node used as a start point based on the acquired network topology and information on an external node(s) connected to the network; a control command generation unit that generates control information for causing a relay apparatus(es) on the calculated broadcast path to perform packet forwarding along the broadcast path; and a communication unit that sets the generated control information in the relay apparatus(es) on the broadcast path.

According to a second aspect, there is provided a communication system, comprising: a control apparatus; and a relay apparatus that processes a packet(s) based on control information set by the control apparatus. The control apparatus comprises: a topology acquisition unit that acquires a topology of a network including a relay apparatus(es) to be controlled; a broadcast path search unit that calculates a broadcast path with an arbitrary external node used as a start point based on the acquired network topology and information on external node(s) connected to the network; a control command generation unit that generates control information for causing a relay apparatus(es) on the calculated broadcast path to perform packet forwarding along the broadcast path; and a communication unit that sets the generated control information in the relay apparatus(es) on the broadcast path.

According to a third aspect, there is provided a communication method, comprising: by a control apparatus for controlling a relay apparatus(es), acquiring a topology of a network including the relay apparatus(es); calculating a broadcast path with an arbitrary external node used as a start point based on the acquired network topology and information on an external node(s) connected to the network; generating control information for causing a relay apparatus(es) on the calculated broadcast path to perform packet forwarding along the broadcast path; and setting the generated control information in the relay apparatus(es) on the broadcast path.

According to a fourth aspect, there is provided a program, causing a computer, mounted on a control apparatus for controlling a relay apparatus(es), to perform: acquiring a topology of a network including a relay apparatus(es); calculating a broadcast path with an arbitrary external node used as a start point based on the acquired network topology and information on an external node(s) connected to the network; generating control information for causing a relay apparatus(es) on the calculated broadcast path to perform packet forwarding along the broadcast path; and setting the generated control information in the relay apparatus(es) on the broadcast path. This program can be recorded in a computer-readable (non-transient) storage medium. Namely, the present invention can be embodied as a computer program product.

### ADVANTAGEOUS EFFECTS OF INVENTION

According to the present invention, even when broadcasting is performed in a centralized-control-type network, it is possible to reduce network load between relay apparatuses and a control apparatus and processing load of the control apparatus.

### BRIEF DESCRIPTION OF THE DRAWINGS

[Fig. 1]

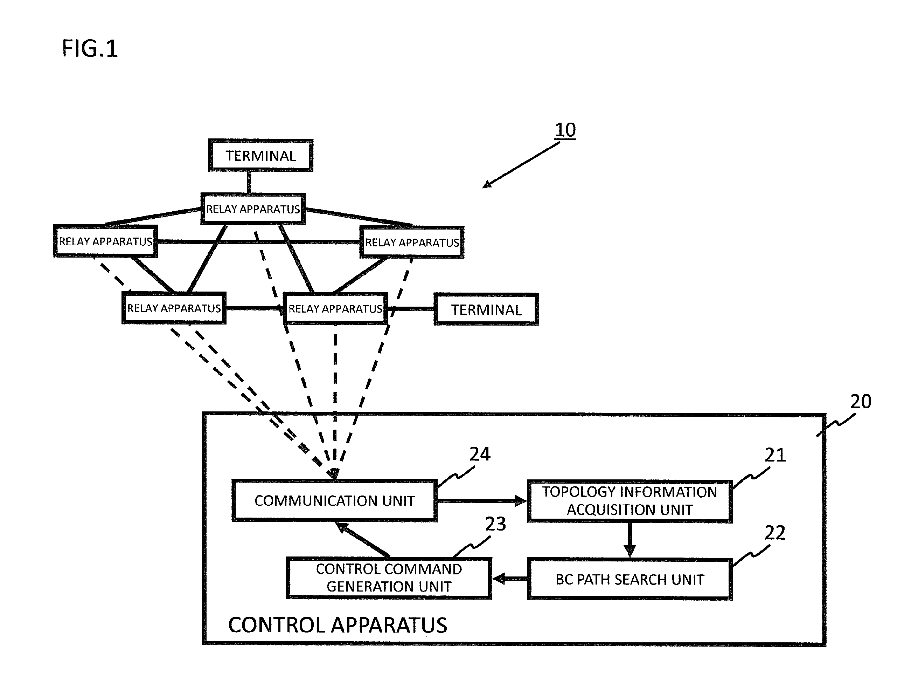

   Fig. 1 illustrates a configuration according to an exemplary embodiment of the present invention.
[Fig. 2]

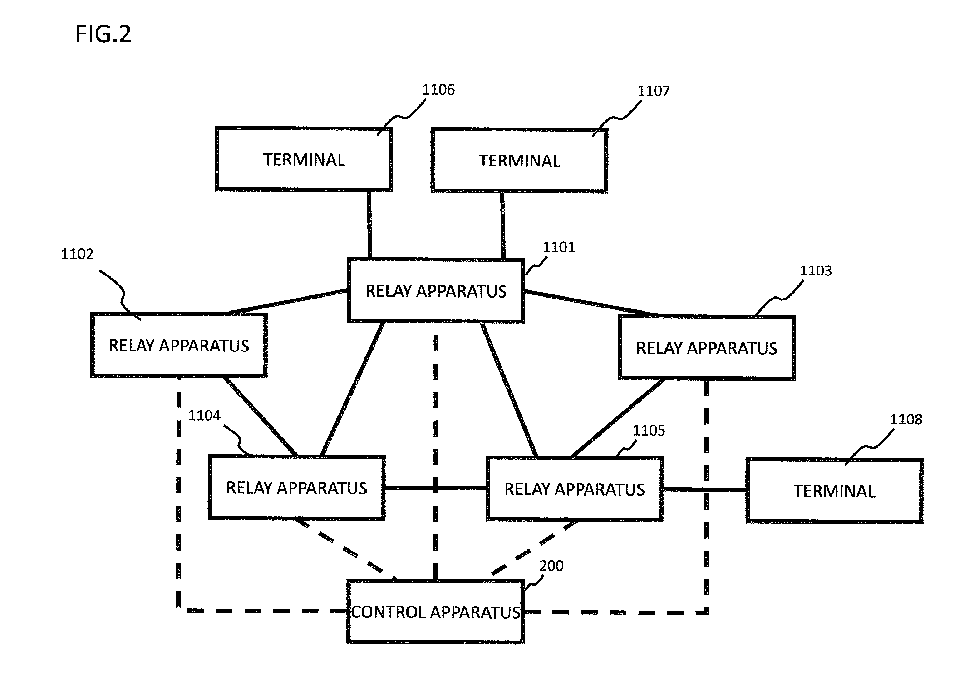

   Fig. 2 illustrates a configuration of a communication system according to a first exemplary embodiment of the present invention.
[Fig. 3]

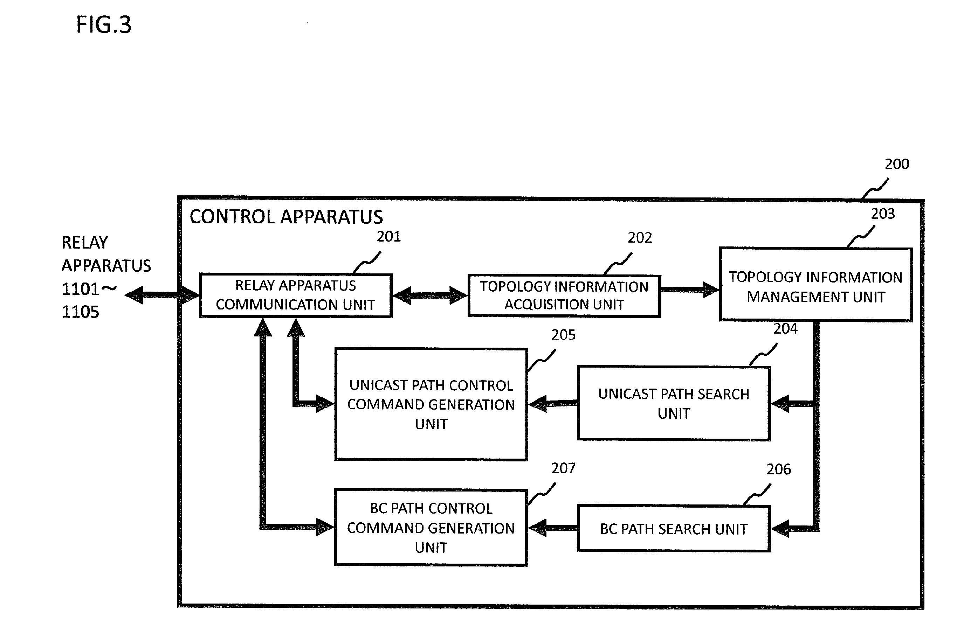

   Fig. 3 illustrates a configuration of a control apparatus according to the first exemplary embodiment of the present invention.
[Fig. 4]

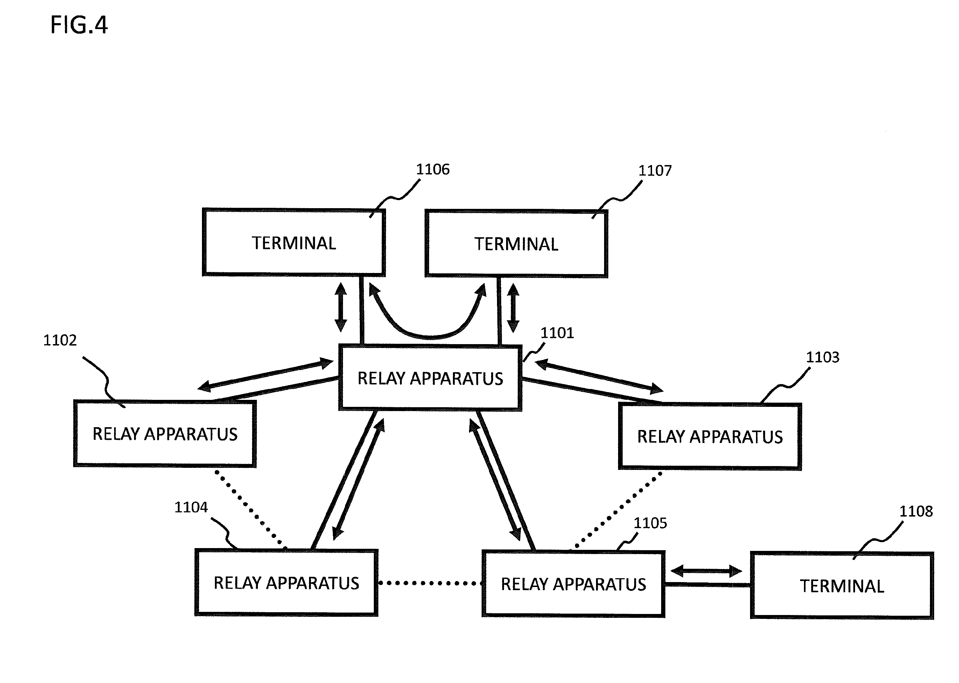

   Fig. 4 illustrates broadcast paths with a relay apparatus 1101 in Fig. 2 used as a base point.
[Fig. 5]

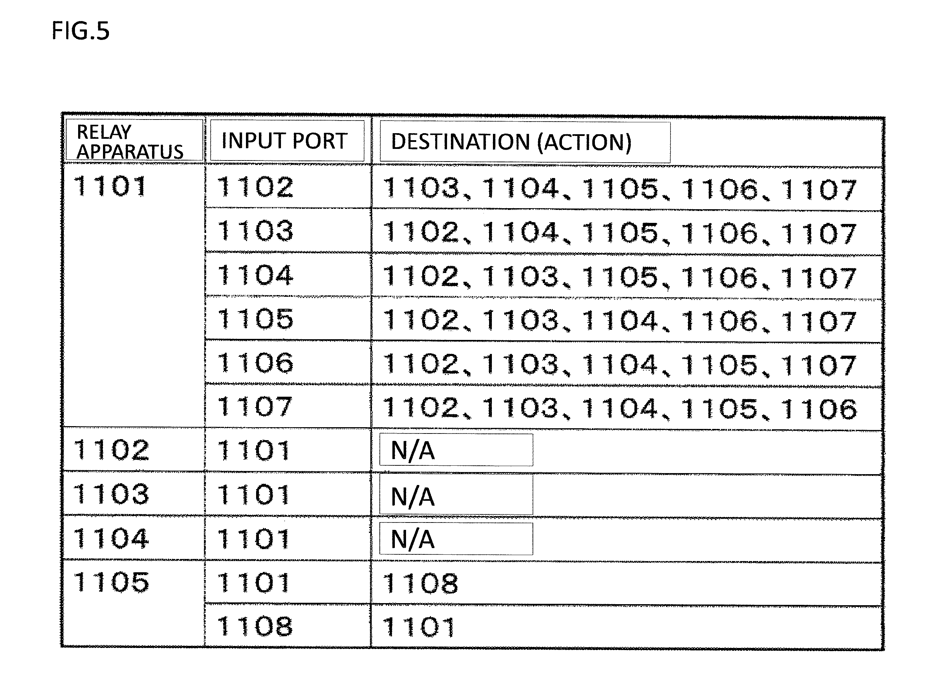

   Fig. 5 illustrates flow entries for the broadcast paths in Fig. 4.
[Fig. 6]

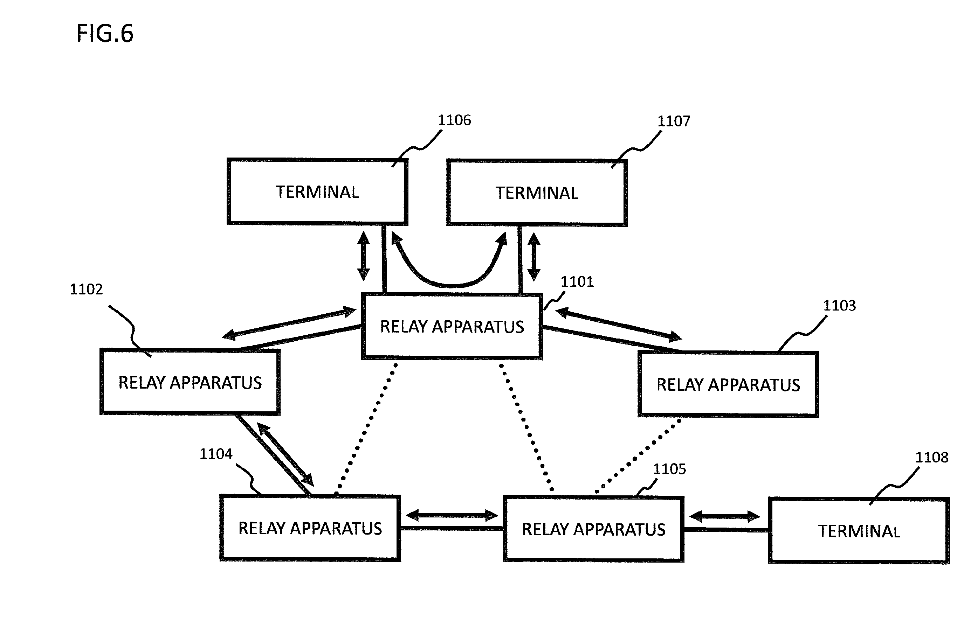

   Fig. 6 illustrates broadcast paths with a relay apparatus 1102 in Fig. 2 used as a base point.
[Fig. 7]

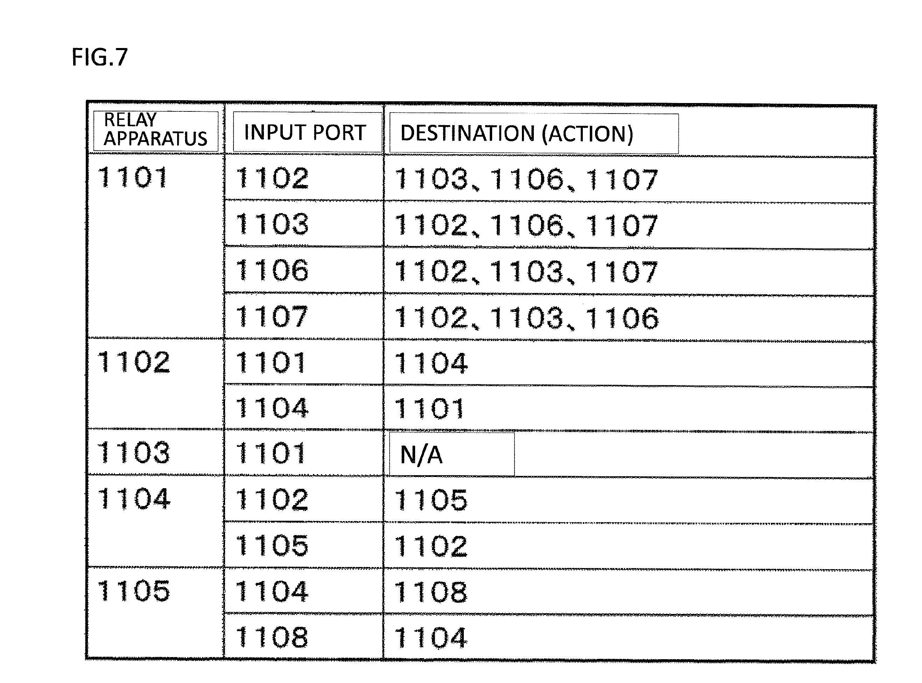

   Fig. 7 illustrates flow entries for the broadcast paths in Fig. 6.
[Fig. 8]

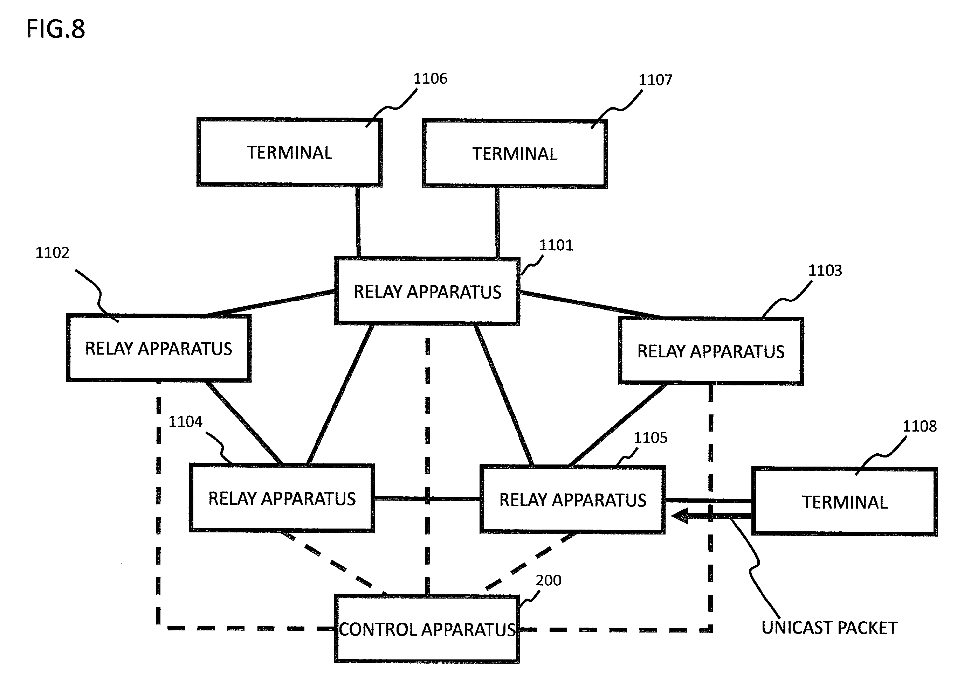

   Fig. 8 illustrates an operation in which a unicast packet is forwarded by using the broadcast paths.
[Fig. 9]

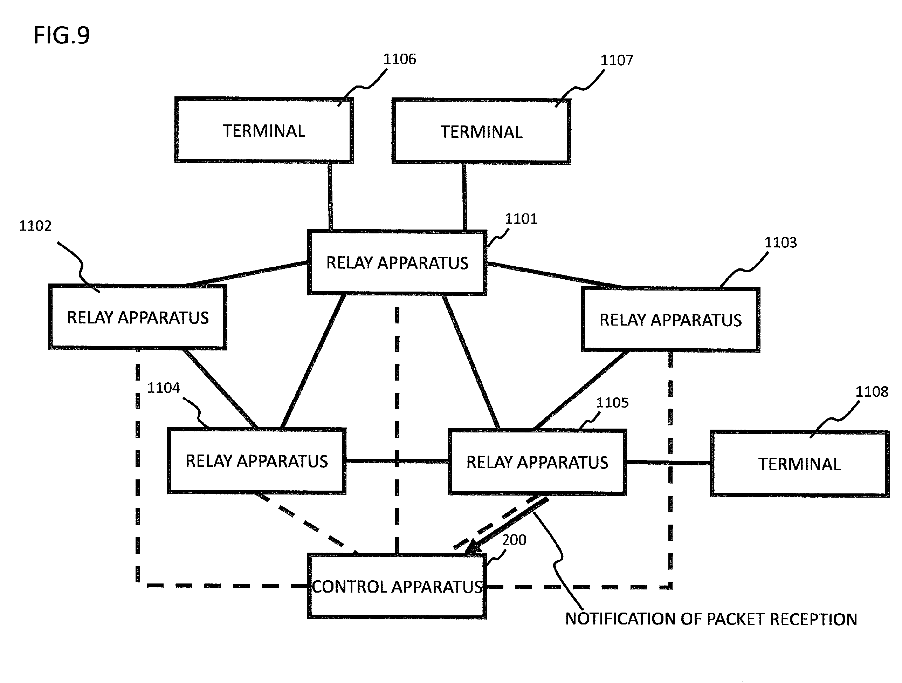

   Fig. 9 is a diagram that follows Fig. 8.
[Fig. 10]

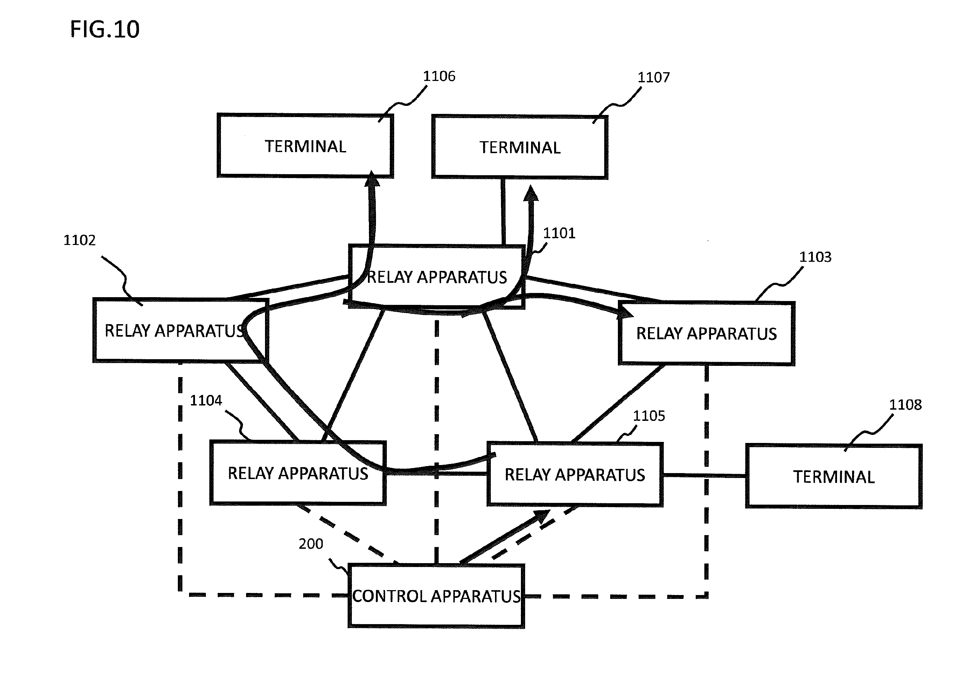

   Fig. 10 is a diagram that follows Fig. 9.

### DESCRPTION OF EMBODIMENTS

First, an outline of an exemplary embodiment of the present invention will be described with reference to the drawings. In the following outline, various components are denoted by reference characters for the sake of convenience. Namely, the following reference characters are merely used as examples to facilitate understanding of the present invention, not to limit the present invention to the illustrated modes.

As illustrated in Fig. 1, an exemplary embodiment of the present invention can be realized by a control apparatus 20. The control apparatus 20 comprises: a topology acquisition unit 21 that acquires a topology of a network 10 including a relay apparatus(es) to be controlled; a broadcast path search unit 22 that calculates a broadcast path with an arbitrary external node used as a start point based on the acquired network topology and information on an external node(s) connected to the network; a control command generation unit 23 that generates control information for causing a relay apparatus(es) on the calculated broadcast path to perform packet forwarding along the broadcast path; and a communication unit 24 that sets the generated control information in the relay apparatus(es) on the broadcast path.

For example, when receiving a topology of a network illustrated in Fig. 2, the control apparatus 20 calculates broadcast paths with an arbitrary external node used as a start point (see Figs. 4 and 6) and sets control information for causing a relay apparatus(es) on these broadcast paths to perform packet forwarding on the broadcast paths.

In this way, before a relay apparatus requests the control apparatus to set control information (corresponding to a flow entry as described above), control information is set. Thus, it is possible to reduce network load between the relay apparatuses and the control apparatus represented by dashed lines in Fig. 1 and processing load of the control apparatus.

### <First Exemplary Embodiment>

Next, a first exemplary embodiment of the present invention will be described in detail with reference to the drawings. Fig. 2 illustrates a configuration of a communication system according to the first exemplary embodiment of the present invention. As illustrated in Fig. 2, the configuration includes relay apparatuses 1101 to 1105 that perform packet processing by using control information set by a control apparatus 200, terminals 1106 to 1108 that are connected to and that communicate with some of the relay apparatuses 1101 to 1105, and the control apparatus 200.

The relay apparatuses 1101 to 1105 are connected to the control apparatus 200 via control interfaces indicated by dashed lines in Fig. 2, respectively.

The terminals 1106 and 1107 are connected to the relay apparatus 1101 via data forwarding interfaces indicated by solid lines in Fig. 2, respectively. The terminal 1108 is connected to the relay apparatus 1105 via a data forwarding interface.

The relay apparatus 1101 is connected to the relay apparatuses 1102 to 1105 via data forwarding interfaces, respectively.

The relay apparatus 1102 is connected to the relay apparatuses 1101 and 1104 via data forwarding interfaces, respectively.

The relay apparatus 1103 is connected to the relay apparatuses 1101 and 1105 via data forwarding interfaces, respectively.

The relay apparatus 1104 is connected to the relay apparatuses 1101, 1102, and 1105 via data forwarding interfaces, respectively.

The relay apparatus 1105 is connected to the relay apparatuses 1101, 1103, and 1104 via data forwarding interfaces, respectively.

OpenFlow switches compliant with the specifications in Non-Patent Literature 2 can be used as these relay apparatuses 1101 to 1105. Apparatuses other than OpenFlow switches may be used. For example, it is possible to use apparatuses that can set packet paths by allowing a user to specify arbitrary packet matching conditions through a CLI (command line interface) via Telnet.

Fig. 3 illustrates a configuration of the control apparatus according to the first exemplary embodiment of the present invention. As illustrated in Fig. 3, the configuration includes a relay apparatus communication unit 201 performing control communication with the relay apparatuses 1101 to 1105, a topology information acquisition unit 202 acquiring a topology of the relay apparatuses 1101 to 1105 via the relay apparatus communication unit 201, a topology information management unit 203 storing the topology, a unicast path search unit 204 searching for a unicast path, a unicast path control command generation unit 205 generating control information that is transmitted to the relay apparatuses 1101 to 1105 on the path searched for by the unicast path search unit 204 and control commands for transmitting the control information and transmitting the control information and the control commands via the relay apparatus communication unit 201, a broadcast (BC) path search unit 206 searching for BC paths, and a BC path control command generation unit 207 generating control information that is transmitted to the relay apparatuses 1101 to 1105 on the paths searched for by the BC path search unit 206 and control commands for transmitting the control information and transmitting the information and the control commands via the relay apparatus communication unit 201.

The relay apparatus communication unit 201 establishes control sessions with the relay apparatuses 1101 to 1105 and transmits/receives control commands. As the control commands, control messages of the OpenFlow protocol described in Non-Patent Literature 2 may be used. Alternatively, the relay apparatus communication unit 201 may perform communication through a CLI via Telnet or SNMP (Simple Network Management Protocol), for example.

The topology information acquisition unit 202 acquires a topology of the relay apparatuses 1101 to 1105. The topology can be acquired by acquiring neighboring relay apparatus recognition information of relay apparatuses. LLDP (Link Layer Discovery Protocol) is a typical example of such protocol. In addition, the control apparatus 200 may cause a certain relay apparatus to output a packet including an ID of and a port number of the relay apparatus from a certain port thereof and may receive the packet from an opposite relay apparatus. In this way, the relationship between the relay apparatuses can also be recognized. When transmitting and receiving packets, the control apparatus can use Packet-Out and Packet-In messages described in Non-Patent Literature 2, respectively. Of course, a network administrator may set the topology before starting the system.

The topology information management unit 203 manages the topology information acquired by the topology information acquisition unit 202 and supplies the topology information to the unicast path search unit 204 and the BC path search unit 206.

The unicast path search unit 204 calculates paths formed by the relay apparatuses 1101 to 1105 between arbitrary terminals. The unicast path search unit 204 may calculate a different path for each pair of relay apparatuses connected to terminals or a path tree by using a relay apparatus connected to a terminal as a base or end point. A shortest path tree (Dijkstra's algorithm is a typical example) can be used to calculate a path. Instead of using a single path, a different path may be used per communication. In addition, this calculation may be performed by using each of the relay apparatuses as a base or end point.

The unicast path control command generation unit 205 generates control information transmitted to a relay apparatus(es) on the unicast path calculated by the unicast path search unit 204 and a control command(s) for transmitting the control information. In addition, the unicast path control command generation unit 205 transmits the generated control command(s) to the relay apparatus(es) on the unicast path via the relay apparatus communication unit 201. At least a destination address is set as a matching condition in the unicast control information. As such destination address, an IP (Internet Protocol) address, a MAC (Media Access Control) address, a TCP/UDP (Transmission Control Protocol/User Datagram Protocol) port, or the like can be used. In addition, as this control command, a flow entry setting message in Non-Patent Literature 2 can be used.

The BC path search unit 206 calculates a spanning tree path so that data can be delivered from a relay apparatus connected to a terminal to at least all the other relay apparatuses connected to terminals. A single spanning tree path or a plurality of spanning tree paths may be calculated for a network. If a plurality of paths are calculated, a different spanning tree path may be calculated for each relay apparatus connected to a terminal. As a path calculation method, a method for calculating a minimum spanning tree (Prim's algorithm and Kruskal's algorithm are typical examples) can be used. In this calculation, if a relay apparatus is not connected to a terminal and is an end of a spanning tree, this relay apparatus may be removed. By repeating this operation, unnecessary relay apparatuses among the relay apparatuses connected to terminals may be removed from a forwarding path.

The BC path control command generation unit 207 determines a matching condition for determining packets that are allowed to be forwarded on broadcast delivery paths. Herein, the matching condition specifies that packets to be forwarded have a broadcast address as a destination address. More specifically, the matching condition specifies that a packet is allowed to be transmitted if the first bit (I/G bit) of a destination MAC address of the packet represents 1. In addition, the BC path control command generation unit 207 generates control information that is transmitted to a relay apparatus(es) on the broadcast paths calculated by the BC path search unit 206 and that includes the matching condition and a control command(s) for transmitting the control information.

A priority lower than that set to the control information generated by the unicast path control command generation unit 205 is set to the broadcast control information generated by the BC path control command generation unit 207. In this way, among the packets that do not match any matching condition in the unicast control information, packets satisfying a predetermined condition can be used as broadcast targets. If a user wishes to prevent certain packets from being forwarded on a broadcast delivery path, it is only necessary to set control information for discarding packets having a matching condition for determining such packets.

A relay apparatus located upstream of a unicast path or a broadcast path (for example, a relay apparatus connected to a terminal serving as a start point of a path) may be configured to embed a flag (unicast/BC determination flag) or the like for determining delivery on a unicast path or a broadcast path in an arbitrary header field. In such case, a relay apparatus located downstream of the unicast path or the broadcast path (for example, a relay apparatus connected to a terminal serving as an end point of the path) may be configured to restore the header field. The flag or the like may be written in an IP ToS (Type of Service) field, a VLAN Priority field, or the like.

In addition, instead of writing the flag in the arbitrary field, an arbitrary address in a header field may be degenerated and the flag may be inserted in the degenerated address. More specifically, a destination MAC address may be degenerated and the degenerated MAC address and the flag may be inserted in a destination MAC address. In this case, a relay apparatus located at an exit (for example, a relay apparatus connected to a terminal serving as an end point of a path) may be configured to restore the original address from the degenerated address.

To determine whether a unicast delivery or a broadcast delivery is performed, a different VLAN (Virtual Local Area Network) ID may be allocated. More specifically, a unicast VLAN ID may be converted to a dedicated VLAN ID, a destination MAC address and an ID obtained by degenerating this VLAN ID may be allocated, and this degenerated ID may be set in a destination MAC address field.

By making these changes, it is possible to determine whether a delivery on a unicast path or a delivery on a broadcast path is performed. As a result, unicast packets having unknown destination addresses can be delivered on broadcast delivery paths by using broadcast control information.

In addition, for broadcast packets such as ARP (Address Resolution Protocol) and VRRP (Virtual Router Redundancy Protocol) packets for which the control apparatus 200 needs to perform a learning operation, control information for forwarding these packets is set in the control apparatus 200 as well. In this way, the control apparatus 200 can perform address learning, for example. In such case, it is desirable that determination information be added in an arbitrary field in each of these packets so that completion of broadcasting can be determined.

Each unit (processing means) in the control apparatus 200 illustrated in Fig. 2 can also be realized by a computer program which causes a computer that constitutes the control apparatus 200 to use hardware thereof and execute each of the above processing operations.

Next, an operation according to the present exemplary embodiment will be described in detail with reference to the drawings. Unicast control information can be set by the same method as that described in Patent Literature 1 or the like. Thus, description thereof will be omitted.

### (Topology Acquisition)

First, at a predetermined timing such as after a certain time elapses or when a new relay apparatus is added, the topology information acquisition unit 202 acquires a network topology. The following description will be made assuming that the topology information acquisition unit 202 acquires the topology of the relay apparatuses 1101 to 1105 illustrated in Fig. 2.

### (Calculation Example 1 of Broadcast Paths)

Next, the BC path search unit 206 calculates broadcast paths on the basis of the topology illustrated in Fig. 2 supplied from the topology information management unit 203 and information about terminals connected to relay apparatuses.

Fig. 4 illustrates broadcast paths with the relay apparatus 1101 in Fig. 2 used as a base point. While Fig. 4 illustrates the links among the relay apparatuses, each solid line represents a link used as a broadcast path and each dotted line represents a link that is not used as a broadcast path. Since the relay apparatus 1101 is connected to the relay apparatuses 1102 to 1105, the links directly connected to these relay apparatuses can be used as broadcast paths. In contrast, the links represented by the dotted lines among the relay apparatuses 1102 to 1105 are removed from the broadcast paths so that no loop is caused in any path.

### [Generation and setting example 1 of broadcast control information]

Next, the BC path control command generation unit 207 generates control information for causing a relay apparatus(es) on the calculated broadcast paths to forward packets on the broadcast paths and transmits the control information to the relay apparatus(es).

The relay apparatus 1101 is connected to two terminals, which are the terminals 1106 and 1107. In such case, in order to broadcast data from a certain terminal to all the other terminals, the BC path control command generation unit 207 transmits control information for forwarding broadcast packets inputted from the terminal 1106 (1107) not only to the relay apparatuses 1102 to 1105 but also to the terminal 1107 (1106) to the relay apparatus 1101.

In addition, the BC path control command generation unit 207 transmits control information for forwarding broadcast packets to the terminal 1108 to the relay apparatus 1105.

Fig. 5 illustrates control information for broadcast paths in Fig. 4 (matching conditions are omitted). For example, control information for forwarding broadcast packets received from the terminal 1106 to the relay apparatuses 1102 to 1105 and the terminal 1107 is set in the relay apparatus 1101 located at a start point of the broadcast paths. However, there are relay apparatuses (for example, the relay apparatuses 1102 to 1104) each of which is located at an end of the broadcast paths and is not connected to any one of the terminals. To cause these relay apparatuses to discard input packets, "not applicable (N/A)" is set as an output action in these relay apparatuses.

### (Calculation Example 2 of Broadcast Paths)

Fig. 6 illustrates broadcast paths with the relay apparatus 1102 in Fig. 2 used as a base point. While Fig. 6 also illustrates the links among the relay apparatuses, each solid line represents a link used as a broadcast path and each dotted line represents a link that is not used as a broadcast path. Since the relay apparatus 1102 is not directly connected to the relay apparatuses 1103 and 1105, a path for forwarding packets to the relay apparatus 1103 via the relay apparatus 1101 and a path for forwarding packets to the relay apparatus 1105 via the relay apparatus 1104 are calculated. In addition, in Fig. 6, too, the links represented by the dotted lines are removed from the broadcast paths so that no loop is caused in any path.

### (Generation and Setting Example 2 of Broadcast Control Information)

Fig. 7 illustrates control information for the broadcast paths in Fig. 6 (matching conditions are omitted). Control information for forwarding broadcast packets received from the terminal 1101 (1104) to the relay apparatus 1104 (1101) is set in the relay apparatus 1102. However, there is a relay apparatus (for example, the relay apparatus 1103) which is located at an end of the broadcast paths and is not connected to any one of the terminals. To cause the relay apparatus to discard input packets, "not applicable (N/A)" is set as an output action in the relay apparatus.

In this way, setting the broadcast control information is completed before the control apparatus 200 receives control information transmission requests from the relay apparatuses.

### (Forwarding of Unicast Packets by Using Broadcast Paths)

In addition, according to the present exemplary embodiment, broadcast paths calculated as described above can be used for forwarding unicast packets having unknown destinations.

Figs. 8 to 10 illustrate an operation of forwarding a unicast packet having an unknown destination by using broadcast paths. As illustrated in Fig. 8, if the terminal 1108 transmits a unicast packet, the relay apparatus 1105 receives this packet and determines whether this packet matches a matching condition in existing control information (broadcast control information).

At this point, since the relay apparatus 1105 only stores broadcast control information, the relay apparatus 1105 notifies the control apparatus 200 of reception of the unicast packet, as illustrated in Fig. 9.

If the control apparatus 200 has already learned the destination of this unicast packet, the control apparatus 200 calculates a unicast path and generates and transmits control information in accordance with a method as described in Patent Literature 1 or the like.

However, if the destination of this unicast packet is unknown, the control apparatus 200 uses the broadcast delivery paths and transmits this unicast packet to all the terminals, as illustrated in Fig. 10. More specifically, the control apparatus 200 causes the relay apparatus 1105 in Fig. 10 to embed a flag or the like indicating that this unicast packet is a broadcast packet in a predetermined field of the unicast packet and to forward the packet. In this way, the control apparatus 200 can cause each relay apparatus to forward the unicast packet as a broadcast packet. In addition, among the relay apparatuses located at the ends of the paths, the control apparatus 200 causes the relay apparatus 1101 connected to the terminals 1106 and 1107 to remove the flag and forward the packet to the terminals 1106 and 1107.

As described above, according to the present exemplary embodiment, broadcast packet forwarding control information is transmitted in advance to the relay apparatuses 1101 to 1105 constituting the network. As a result, processing for exchanging broadcast packet control information between the relay apparatuses 1101 to 1105 and the control apparatus 200 and processing performed when the control apparatus 200 responds to the control information transmission requests can be reduced.

In addition, according to the present exemplary embodiment, unicast packets having unknown destinations can also be forwarded by using preset broadcast paths. More specifically, to realize necessary forwarding, it is only necessary that the control apparatus 200 cause arbitrary relay apparatuses to rewrite and restore a packet header. In Figs. 8 to 10, the control apparatus 200 is first notified of reception of a unicast packet having an unknown destination and the unicast packet is forwarded by using the broadcast paths. However, alternatively, control information for delivering unicast packets having unknown destinations on the broadcast paths (including the control apparatus 200) may be set in advance and necessary control information may be set later.

While an exemplary embodiment of the present invention has thus been described, the present invention is not limited thereto. Further variations, substitutions, or adjustments can be made without departing from the basic technical concept of the present invention. For example, the network configuration, the number of switches, and the number of terminals used in the above exemplary embodiment are merely examples. The present invention is not limited to these numbers.

In addition, the above exemplary embodiment has been described on the basis of broadcast packet forwarding control. However, packets other than broadcast packets can be used as control target packets. For example, the present invention is applicable to forwarding of multicast packets.

### (Note)

The present invention can adopt the following modes.

### (Mode 1)

A control apparatus may be the control apparatus according to the first aspect.

### (Mode 2)

When receiving notification of reception of a unicast packet with an unknown destination from one of the relay apparatus(es) to be controlled, the control apparatus may cause the relay apparatus(es) on the broadcast paths to forward the unicast packet along the broadcast path.

### (Mode 3)

The control apparatus may set control information for causing a relay apparatus located upstream along the broadcast path to insert information identifying the broadcast or unicast in a packet header, and the control apparatus may set control information for causing a relay apparatus(es) located downstream along the broadcast path to restore the packet having the packet header including the information identifying the broadcast or unicast.

### (Mode 4)

The control apparatus may set control information for forwarding to the control apparatus a packet according to a predetermined protocol, for which learning by the control apparatus is necessary, among packets to be broadcasted and perform learning using the forwarded packet.

### (Mode 5)

A communication system may be the communication system according to the second aspect.

### (Mode 6)

A communication method may be the communication method according to the third aspect.

### (Mode 7)

A program may be the program according to the fourth aspect.

The disclosure of each of the above Patent Literature and Non-Patent Literatures is incorporated herein by reference thereto. Modifications and adjustments of the exemplary embodiments and the examples are possible within the scope of the overall disclosure (including the claims) of the present invention and based on the basic technical concept of the present invention. In addition, various combinations and selections of various disclosed elements (including the elements in each of the claims, exemplary embodiments, examples, drawings, etc.) are possible within the scope of the claims of the present invention. Namely, the present invention of course includes various variations and modifications that could be made by those skilled in the art according to the overall disclosure including the claims and the technical concept. In particular, the present description discloses numerical value ranges. However, even if the description does not particularly disclose arbitrary numerical values or small ranges included in the ranges, these values and ranges should be deemed to have been specifically disclosed.

### REFERENCE SIGNS LIST

- 10: network
- 21, 202: topology information acquisition unit
- 22, 207: broadcast path search unit (BC path search unit)
- 23: control command generation unit
- 24: communication unit
- 20, 200: control apparatus
- 201: relay apparatus communication unit
- 203: topology information management unit
- 204: unicast path search unit
- 205: unicast path control command generation unit
- 206: broadcast path search unit (BC path search unit)
- 207: broadcast path control command generation unit (BC path control command generation unit)
- 1101 to 1105: relay apparatus
- 1106 to 1108: terminal

## Claims

1. A control apparatus, comprising:
a topology acquisition unit that acquires a topology of a network including a relay apparatus(es) to be controlled;
a broadcast path search unit that calculates a broadcast path with an arbitrary external node used as a start point based on the acquired network topology and information on an external node(s) connected to the network;
a control command generation unit that generates control information for causing a relay apparatus(es) on the calculated broadcast path to perform packet forwarding along the broadcast path; and
a communication unit that sets the generated control information in the relay apparatus(es) on the broadcast path.

2. The control apparatus according to claim 1, wherein
when receiving notification of reception of a unicast packet with an unknown destination from one of the relay apparatus(es) to be controlled, the control apparatus causes the relay apparatus(es) on the broadcast paths to forward the unicast packet along the broadcast path.

3. The control apparatus according to claim 1 or 2, wherein
the control apparatus sets control information for causing a relay apparatus located upstream along the broadcast path to insert information identifying the broadcast or unicast in a packet header, and
the control apparatus sets control information for causing a relay apparatus(es) located downstream along the broadcast path to restore the packet having the packet header including the information identifying the broadcast or unicast.

4. The control apparatus according to any one of claims 1 to 3, wherein
the control apparatus sets control information for forwarding to the control apparatus a packet according to a predetermined protocol, for which learning by the control apparatus is necessary, among packets to be broadcasted and performs learning using the forwarded packet.

5. A communication system, comprising:
a control apparatus; and
a relay apparatus that processes a packet(s) based on control information set by the control apparatus, wherein
the control apparatus comprises:
a topology acquisition unit that acquires a topology of a network including a relay apparatus(es) to be controlled;
a broadcast path search unit that calculates a broadcast path with an arbitrary external node used as a start point based on the acquired network topology and information on external node(s) connected to the network;
a control command generation unit that generates control information for causing a relay apparatus(es) on the calculated broadcast path to perform packet forwarding along the broadcast path; and
a communication unit that sets the generated control information in the relay apparatus(es) on the broadcast path.

6. A communication method, comprising:
by a control apparatus for controlling a relay apparatus(es), acquiring a topology of a network including the relay apparatus(es);
calculating a broadcast path with an arbitrary external node used as a start point based on the acquired network topology and information on an external node(s) connected to the network;
generating control information for causing a relay apparatus(es) on the calculated broadcast path to perform packet forwarding along the broadcast path; and
setting the generated control information in the relay apparatus(es) on the broadcast path.

7. A program, causing a computer, mounted on a control apparatus for controlling a relay apparatus(es), to perform:
acquiring a topology of a network including a relay apparatus(es);
calculating a broadcast path with an arbitrary external node used as a start point based on the acquired network topology and information on an external node(s) connected to the network;
generating control information for causing a relay apparatus(es) on the calculated broadcast path to perform packet forwarding along the broadcast path; and
setting the generated control information in the relay apparatus(es) on the broadcast path.

8. A recording medium that stores a program causing a computer, mounted on a control apparatus for controlling a relay apparatus(es), to perform:
acquiring a topology of a network including the relay apparatus(es);
calculating a broadcast path with an arbitrary external node used as a start point based on the acquired network topology and information on an external node(s) connected to the network;
generating control information for causing a relay apparatus(es) on the calculated broadcast path to perform packet forwarding along the broadcast path; and
setting the generated control information in the relay apparatus(es) on the broadcast path.
